# FASCICULE DE BREVET EUROPEEN

(11) **EP 3 257 730 B1**
(45) Date de publication et mention de la délivrance du brevet: **28.11.2018**
(21) Numéro de dépôt: 17176376.6
(22) Date de dépôt: 16.06.2017
(51) Int. Cl.: B62D 35/02, B62D 37/02

(54) **PARTIE ARRIÈRE DE VÉHICULE AUTOMOBILE AVEC CONDUIT ET VÉHICULE ASSOCIÉ**
RÜCKWÄRTIGER TEIL EINES KRAFTFAHRZEUGS MIT LEITUNG, UND ENTSPRECHENDES FAHRZEUG
REAR PORTION OF A MOTOR VEHICLE WITH CONDUIT AND ASSOCIATED MOTOR VEHICLE

(30) Priorité: 17.06.2016 FR 1655681
(43) Date de publication de la demande: 20.12.2017
(73) Titulaire: Flex-N-Gate France, 25405 Audincourt (FR)
(72) Inventeur: GUYON, Cyrille, 25600 NOMMAY (FR); GROS, Virgile, 95150 TAVERNY (FR)
(74) Mandataire: Lavoix

(56) Documents cités:
- EP-A1- 2 979 959
- JP-A- H0 725 369
- JP-A- 2013 023 199
- JP-A- 2014 104 844
- JP-A- 2014 104 845

## Description

La présente invention concerne une partie arrière de véhicule automobile.

Dans un véhicule, une partie de la carrosserie de la partie arrière délimite un passage d'une roue arrière, c'est-à-dire un emplacement pour une roue reliée à l'essieu arrière.

La roue est espacée de la carrosserie de sorte notamment à permettre la rotation de la roue et à faciliter le montage et le démontage de la roue.

Cependant, lorsque le véhicule automobile circule, de l'air s'engouffre dans le passage de la roue arrière et génère notamment de nombreuses turbulences. Cela dégrade le coefficient de traînée donc l'aérodynamique du véhicule, entraîne une surconsommation de carburant et peut causer des nuisances sonores.

Une solution pour résoudre ces problèmes est d'obturer le passage de roue par une pièce supplémentaire après le montage de la roue sur le véhicule, de sorte à empêcher l'air de s'engouffrer. Le document JPH0725369 divulgue un dispositif tel que décrit précédemment.

Cependant, cette solution n'est pas satisfaisante car la pièce supplémentaire rend plus difficile, voire empêche, le démontage de la roue. En cas de crevaison, il n'est alors plus possible à un particulier de changer sa roue facilement. De plus, la pièce supplémentaire dissimule généralement la roue et les jantes, ce qui peut être jugé peu esthétique.

Un but de l'invention est donc d'améliorer l'aérodynamique d'un véhicule automobile sans empêcher le démontage facile de sa roue arrière.

A cet effet, l'invention a pour objet une partie arrière de véhicule automobile comprenant une pièce de carrosserie et une peau, la pièce de carrosserie et la peau délimitant entre elles un conduit de circulation d'air, le conduit s'étendant entre une entrée et une sortie, l'entrée débouchant dans un passage d'une roue arrière et la sortie à l'arrière du véhicule.

Selon des modes particuliers de l'invention, la partie arrière présente l'une ou plusieurs des caractéristiques suivantes, prise(s) isolément ou suivant toute(s) combinaison(s) techniquement possible(s) :
- la pièce de carrosserie est une crosse de pare-chocs ;
- la peau est fixée directement sur la pièce de carrosserie ;
- le conduit est réalisé en creux sur une surface extérieure de la pièce de carrosserie et est fermé par la peau ;
- la peau s'étend dans la continuité de la surface extérieure de la pièce de carrosserie autour du conduit ;
- l'entrée est entièrement située au-dessus du plan horizontal comprenant un centre de la roue ;
- l'entrée a une surface au moins 1,5 fois supérieure à la surface de la sortie ;
- la partie arrière comprend entre deux et quatre séparateurs d'air continus entre l'entrée et la sortie, les séparateurs délimitant dans le conduit des sous-conduits s'étendant entre l'entrée et la sortie ;
- la peau s'étend dans la continuité de la surface extérieure de la pièce de carrosserie autour du conduit,
- la partie arrière comprend des volets mobiles à l'entrée et/ou à la sortie, les volets étant aptes à faire varier la quantité d'air pouvant traverser l'entrée et/ou la sortie du conduit.

L'invention a en outre pour objet un véhicule automobile comprenant une partie arrière telle que définie ci-dessus.

D'autres caractéristiques et avantages de l'invention apparaîtront à la lecture de la description qui va suivre, donnée uniquement à titre d'exemple et faite en se référant aux dessins annexés, sur lesquels :
- la figure 1 est une vue en perspective d'un véhicule automobile,
- la figure 2 est une vue schématique de côté d'une roue et d'un conduit de circulation d'air, et
- les figures 3 et 4 sont des vues éclatées et en perspective d'une pièce de carrosserie et d'une peau délimitant le conduit de circulation d'air de la figure 2 selon un mode de réalisation.

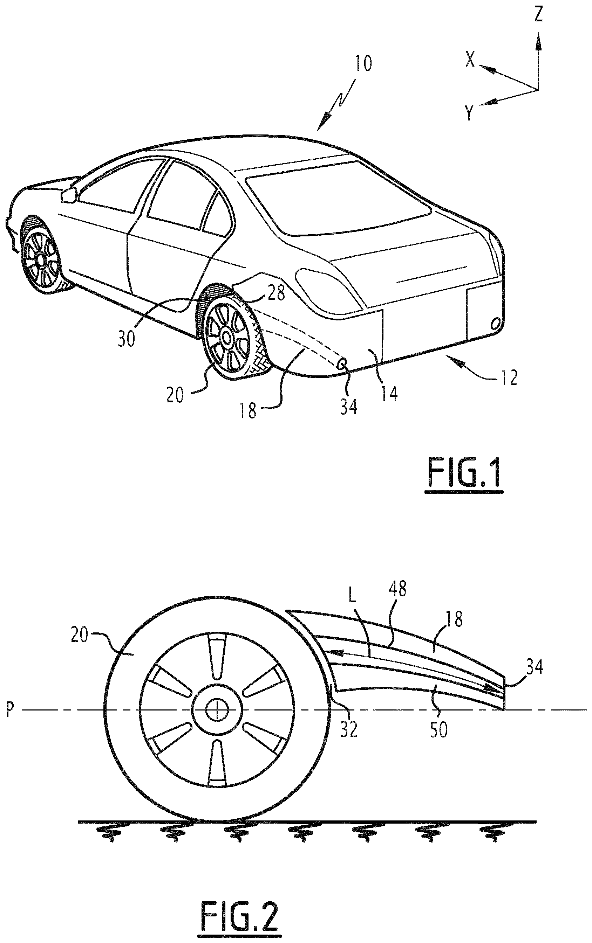

Dans tout ce qui suit, les termes d'orientation s'entendent par rapport au repère orthogonal pris en référence au sens de déplacement normal du véhicule automobile 10, représenté sur la figure 1 et dans lequel on distingue :
- un axe longitudinal X, horizontal s'étendant de l'arrière vers l'avant ;
- un axe transversal Y, horizontal s'étendant de la droite vers la gauche ; et
- un axe vertical Z, s'étendant du bas vers le haut.

Le terme « horizontal » est défini par rapport au plan XY, le terme « vertical » est défini par rapport au plan XZ ou YZ.

En référence à la figure 1, on décrit un véhicule automobile 10 comprenant une partie arrière 12.

La partie arrière 12 comprend notamment une pièce de carrosserie 14 et une peau 16 formant une partie de la surface externe du véhicule, c'est-à-dire que la pièce 14 et la peau 16 sont au moins partiellement visibles depuis l'extérieur du véhicule.

La pièce de carrosserie 14 et la peau 16 délimitent entre elles un conduit 18 de circulation d'air, visible sur les figures 1 à 4.

La partie arrière 12 comprend en outre au moins une roue arrière 20 présentant un centre, autour duquel la roue est mobile en rotation.

La pièce de carrosserie 14 présente une surface extérieure 22, orientée vers l'extérieur du véhicule automobile, et une surface intérieure, orientée vers l'intérieur du véhicule automobile.

La pièce de carrosserie 14 comprend une partie sensiblement longitudinale 24 et une partie sensiblement transversale 26.

La partie sensiblement transversale 26 s'étend en largeur et la partie sensiblement longitudinale sur un côté de la voiture entre la roue arrière et l'arrière du véhicule.

On entend ici par arrière du véhicule la partie extrêmale arrière de la partie arrière du véhicule.

La pièce de carrosserie 14 forme un coin arrière de la voiture.

Elle est, par exemple, une crosse de pare-chocs.

La pièce de carrosserie 14, plus particulièrement un bord inférieur 28 de la pièce, délimite au moins partiellement un passage de roue 30 dans lequel la roue arrière 20 est située. La roue 20 est, par exemple, fixée à un essieu, le passage 30 de roue étant adapté pour permettre la rotation de la roue avec l'essieu dans le passage de roue.

Le passage 30 de roue est, par exemple, délimité par la carrosserie sous la forme d'un arc de cercle.

La pièce de carrosserie 14 est réalisée en polymère tel que par exemple du polypropylène.

La peau 16 est, par exemple, une pièce d'épaisseur constante ou variable, comprise entre 2 mm et 5 mm.

Alternativement, la peau 16 est un assemblage de plusieurs pièces.

La peau 16 est, par exemple, réalisée en polymère, par exemple, en polypropylène ou en thermoplastique élastomère.

La peau 16 s'étend en regard d'une partie de la surface extérieure 22 de la partie longitudinale 24 de la pièce de carrosserie 14.

La peau 16 présente ici un bord arrière 40, un bord avant 42, un bord haut 44 et un bord bas 46.

Le bord arrière 40 et le bord avant 42 sont alignés avec la pièce de carrosserie 14, de sorte qu'ils s'étendent dans la continuité l'un de l'autre.

La peau 16 est ici fixée directement sur la pièce de carrosserie 14, plus particulièrement au niveau du bord haut 44 et du bord bas 46.

La peau est, par exemple, collée sur la pièce de carrosserie. Alternativement, la peau est, par exemple, soudée sur la pièce de carrosserie.

Alternativement la peau est fixée de manière réversible grâce à un ensemble de pièces complémentaires telles que des clips.

Alternativement, la peau est assemblée sur la pièce de carrosserie par des moyens de fixation mécaniques tels que des vis et/ou des rivets.

Le conduit 18 s'étend continument selon la direction longitudinale entre une entrée 32 et une sortie 34. Il met ainsi en communication fluidique l'entrée et la sortie.

L'entrée 32 débouche dans le passage 30 de roue arrière et la sortie 34 à l'arrière du véhicule. Plus particulièrement, l'entrée 32 débouche face à la moitié arrière de la roue 20.

Lorsque le passage 30 de roue est délimité sous la forme d'un arc de cercle, l'entrée 32 du conduit est ménagée dans la moitié arrière de l'arc de cercle.

L'entrée 32 est entièrement située au-dessus du plan horizontal P comprenant le centre C de la roue.

Cela permet notamment de réduire les entrées d'eau, de boue, de neige, de gravillons ou autres objets pouvant dégrader le conduit.

La sortie 34 est située dans la partie sensiblement transversale 26 de la pièce 14.

La sortie 34 est située généralement plus bas que l'entrée 32, c'est-à-dire que le centre géométrique de la sortie est situé plus bas que le centre géométrique de l'entrée.

Cela permet notamment d'évacuer l'eau ou tout autre objet éventuellement présent dans le conduit.

L'entrée 32 et la sortie 34 sont ici sensiblement rectangulaires.

En variante, le conduit a une forme ovale, ronde ou triangulaire selon des plans de coupe perpendiculaires à l'écoulement de l'air dans le conduit.

L'entrée 32 a une surface au moins 1,5 fois supérieure à la surface de la sortie 34.

Cela permet notamment un meilleur captage de l'air présent dans le passage de roue, une accélération de l'air en sortie et une meilleure intégration visuelle de la sortie dans la partie arrière.

En outre, la surface de l'entrée 32 est inférieure ou égale à 3 fois la surface de la sortie 34. La surface de l'entrée 32 est, par exemple, comprise entre 1 500 mm² et 45 000 mm² et la surface de la sortie 34 entre 1 000 mm² et 30 000 mm².

Le conduit 18 est délimité entre l'entrée 32 et la sortie 34 par des parois présentant avantageusement un revêtement de surface ne présentant pas ou peu d'aspérité, de sorte à favoriser un écoulement de l'air optimal dans le conduit 18.

Dans un mode de réalisation, le revêtement de surface présente un grainage fin. Cela permet notamment d'obtenir une esthétique souhaitée en maintenant une performance aérodynamique souhaitée.

Le conduit 18 est délimité en haut et en bas par des surfaces incurvées reliant l'entrée 32 et la sortie 34.

Chaque courbe a en tout point un cercle osculateur ayant un centre situé sous ladite courbe.

Alternativement, le conduit présente localement une zone pour laquelle le cercle osculateur a un centre au-dessus de la courbe. La zone est située en entrée et/ou en sortie du conduit.

L'écoulement de l'air est facilité par l'absence de changement brusque de courbure.

La longueur L du conduit 18 est définie comme la distance entre le centre géométrique de l'entrée et le centre géométrique de la sortie suivant l'écoulement de l'air dans le conduit 18. Elle est, par exemple, comprise entre 50 mm et 800 mm et dépend de la géométrie de la pièce de carrosserie 14 et de la longueur du conduit souhaitée.

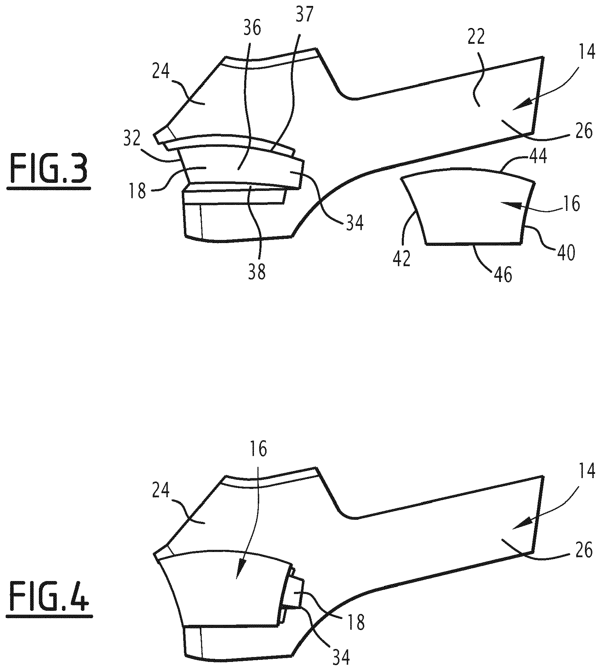

Dans le mode de réalisation représenté sur les figures 3 et 4, le conduit 18 est réalisé en creux sur la surface extérieure 22 de la pièce de carrosserie 14, plus particulièrement dans la partie longitudinale 24 de la pièce de carrosserie, et est fermé par la peau 16.

Le conduit 18 est ici creusé en U sur la surface extérieure 22, c'est-à-dire qu'il est délimité dans la pièce de carrosserie par un fond 36 et des bords 37, 38.

Les bords 37, 38 délimitent en haut et en bas le conduit 18 et forment les surfaces incurvées. Les bords 37, 38 forment, par exemple, des angles obtus avec le fond 36 du conduit.

La peau 16 s'étend dans la continuité de la surface extérieure 22 de la pièce 14 de carrosserie autour du conduit 18, c'est-à-dire que la peau s'étend en affleurement avec le reste de la surface externe, ce qui fait un extérieur lisse. Cela permet notamment d'obtenir une meilleure apparence.

Plus particulièrement, le bord haut 44 et le bord bas 46 de la peau 16 sont fixés à la pièce 14 en dehors du conduit 18 de part et d'autre du conduit.

Le conduit 18 a une profondeur variable, définie dans l'épaisseur de la pièce 14, comprise entre 10 mm et 100 mm.

La partie arrière comprend éventuellement entre deux et quatre séparateurs d'air 48 continus entre l'entrée et la sortie. Les séparateurs s'étendent dans le conduit 18 et délimitent dans le conduit des sous-conduits 50 s'étendant entre l'entrée et la sortie.

Les séparateurs 48 sont, par exemple, régulièrement espacés.

En variante, les séparateurs d'air sont placés uniquement en entrée et/ou en sortie du conduit. Ils ne sont alors pas continus entre l'entrée et la sortie. Le nombre de séparateurs en entrée et en sortie est éventuellement différent.

La partie arrière comprend éventuellement des volets mobiles (non représentés) à l'entrée 32 et/ou à la sortie 34, les volets étant aptes à faire varier la quantité d'air pouvant traverser l'entrée et/ou la sortie du conduit.

Les volets s'étendent, par exemple, parallèlement aux uns aux autres et en travers de l'entrée 32 et/ou de la sortie 34 du conduit. Ils sont mobiles en rotation selon un axe principal entre au moins deux positions, de sorte à varier l'obturation de l'entrée et/ou de la sortie par les volets.

Les volets sont avantageusement pilotables pour s'adapter aux conditions de roulement.

Cela permet notamment d'adapter la circulation d'air à des paramètres du type vitesse du véhicule, mais également la présence d'eau, de boue, de neige pouvant bloquer le conduit.

La pièce de carrosserie 14 intègre au niveau du conduit des pièces de fixation destinées à recevoir des éléments tels qu'un dispositif de faisceau électrique, un capteur ou une durite et/ou des supports jouant le rôle d'entretoise entre la caisse en blanc et le pare-chocs. Ces éléments sont alors cachés par la peau 16.

Dans une variante, la pièce de carrosserie est composée de plusieurs pièces distinctes assemblées.

De manière classique, la partie arrière présente deux fois la structure décrite ci-dessus : du côté gauche, c'est-à-dire relativement à la roue arrière gauche, et du côté droit, relativement à la roue arrière droite. Les conduits de circulation respectifs sont délimités par une peau respective et une pièce commune au côté gauche et au côté droite, par exemple, un pare-chocs, ou par deux pièces de carrosserie séparées, par exemple, deux crosses de pare-chocs formant chacune un coin arrière de la voiture.

L'air entrant dans le passage de roue est ainsi évacué par le conduit de circulation. Cela favorise ainsi l'aérodynamique du véhicule automobile, de sorte notamment à limiter la consommation de carburant.

Un tel conduit de circulation présente également l'avantage d'améliorer le refroidissement des freins agissant sur la roue arrière.

De plus, le montage de la voiture n'est pas amené à être modifié pour intégrer une partie arrière de véhicule automobile comprenant un tel conduit de circulation : la peau est simplement fixée sur la pièce de carrosserie préalablement à, pendant ou après le montage.

## Revendications

1. Partie arrière (12) de véhicule automobile (10) comprenant une pièce de carrosserie (14) et une peau (16), la pièce de carrosserie (14) et la peau (16) délimitant entre elles un conduit (18) de circulation d'air, le conduit (18) s'étendant entre une entrée (32) et une sortie (34), l'entrée (32) débouchant dans un passage (30) d'une roue arrière et la sortie (34) à l'arrière du véhicule, **caractérisé en ce que** le conduit (18) est réalisé en creux sur une surface extérieure (22) de la pièce de carrosserie (14) et est fermé par la peau (16).

2. Partie arrière selon la revendication 1, **caractérisée en ce que** la pièce de carrosserie (14) est une crosse de pare-chocs.

3. Partie arrière selon la revendication 1 ou 2, **caractérisée en ce que** la peau (16) est fixée directement sur la pièce de carrosserie (14).

4. Partie arrière selon la revendication 1, **caractérisée en ce que** la peau (16) s'étend dans la continuité de la surface extérieure (22) de la pièce de carrosserie (14) autour du conduit (18).

5. Partie arrière selon l'une quelconque des revendications 1 à 4, **caractérisée en ce que** l'entrée (32) est entièrement située au-dessus du plan horizontal (P) comprenant un centre (C) de la roue.

6. Partie arrière selon l'une quelconque des revendications 1 à 5, **caractérisée en ce que** l'entrée (32) a une surface au moins 1,5 fois supérieure à la surface de la sortie (34).

7. Partie arrière selon l'une quelconque des revendications 1 à 6, comprenant entre deux et quatre séparateurs (48) d'air continus entre l'entrée (32) et la sortie (34), les séparateurs (48) délimitant dans le conduit (18) des sous-conduits (50) s'étendant entre l'entrée (32) et la sortie (34).

8. Partie arrière selon l'une quelconque des revendications 1 à 7, comprenant des volets mobiles à l'entrée (32) et/ou à la sortie (34), les volets étant aptes à faire varier la quantité d'air pouvant traverser l'entrée (32) et/ou la sortie (34) du conduit (18).

9. Véhicule automobile (10) comprenant une partie arrière (12) selon l'une quelconque des revendications 1 à 8.

## Patentansprüche

1. Heckpartie (12) eines Automobil-Fahrzeugs (10), aufweisend ein Karosserieteil (14) und eine Haut (16), wobei das Karosserieteil (14) und die Haut (16) zwischen sich eine Leitung (18) zur Luftzirkulation begrenzen, wobei sich die Leitung (18) zwischen einem Eingang (32) und einem Ausgang (34) erstreckt, wobei der Eingang (32) in einer Passage (30) eines Hinterrads ausmündet und der Ausgang (34) am Heck (34) des Fahrzeugs, **dadurch gekennzeichnet, dass** die Leitung (18) auf einer Außenfläche (22) des Karosserieteils (14) hohlrealisiert ist und durch die Haut (16) verschlossen ist.

2. Heckpartie gemäß Anspruch 1, **dadurch gekennzeichnet, dass** das Karosserieteil (14) ein Stoßfängerkreuz ist.

3. Heckpartie gemäß Anspruch 1 oder 2, **dadurch gekennzeichnet, dass** die Haut (16) direkt an dem Karosserieteil (14) befestigt ist.

4. Heckpartie gemäß Anspruch 1, **dadurch gekennzeichnet, dass** die Haut (16) sich in der Kontinuität der Außenfläche (22) des Karosserieteils (14) um die Leitung (18) herum erstreckt.

5. Heckpartie gemäß irgendeinem der Ansprüche 1 bis 4, **dadurch gekennzeichnet, dass** der Eingang (32) gänzlich über der Horizontalebene (P) angeordnet ist, welche eine Mitte (C) des Rads enthält.

6. Heckpartie gemäß irgendeinem der Ansprüche 1 bis 5, **dadurch gekennzeichnet, dass** der Eingang (32) eine Fläche hat, die wenigstens 1,5 mal größer ist als die Fläche des Ausgangs (34) .

7. Heckpartie gemäß irgendeinem der Ansprüche 1 bis 6, aufweisend zwischen zwei und vier kontinuierliche Luft-Trennglieder (48) zwischen dem Eingang (32) und dem Ausgang (34), wobei die Trennglieder (48) in der Leitung (18) Unterleitungen (50) begrenzen, die sich zwischen dem Eingang (32) und dem Ausgang (34) erstrecken.

8. Heckpartie gemäß irgendeinem der Ansprüche 1 bis 7, aufweisend bewegbare Klappen am Eingang (32) und/oder am Ausgang (34), wobei die Klappen imstande sind, die Luftmenge variieren zu lassen, die den Eingang (32) und/oder den Ausgang (34) der Leitung (18) durchqueren kann.

9. Automobil-Fahrzeug (10) mit einer Heckpartie (12) gemäß irgendeinem der Ansprüche 1 bis 8.

## Claims

1. Rear portion (12) of a motor vehicle (10) comprising a body part (14) and a skin (16), the body part (14) and the skin (16) delimiting between them an air-circulation duct (18), the duct (18) extending between an inlet (32) and an outlet (34), the inlet (32) opening into a wheel housing (30) of a rear wheel and the outlet (34) opening at the rear of the vehicle, **characterised in that** the duct (18) is recessed into an outer surface (22) of the body part (14) and is closed by the skin (16).

2. Rear portion according to claim 1, **characterised in that** the body part (14) is a bumper side wing.

3. Rear portion according to claim 1 or 2, **characterised in that** the skin (16) is fastened directly to the body part (14).

4. Rear portion according to claim 1, **characterised in that** the skin (16) extends in the continuity of the outer surface (22) of the body part (14) around the duct (18).

5. Rear portion according to any one of claims 1 to 4, **characterised in that** the inlet (32) is entirely situated above the horizontal plane (P) comprising a centre (C) of the wheel.

6. Rear portion according to any one of claims 1 to 5, **characterised in that** the inlet (32) has an area which is at least 1.5 times greater than the area of the outlet (34).

7. Rear portion according to any one of claims 1 to 6, comprising between 2 and 4 continuous air separators (48) between the inlet (32) and the outlet (34), the separators (48) delimiting sub-ducts (50) in the duct (18) that extend between the inlet (32) and the outlet (34).

8. Rear portion according to any one of claims 1 to 7, comprising movable flaps at the inlet (32) and/or at the outlet (34), the flaps being able to vary the quantity of air which can pass through the inlet (32) and/or the outlet (34) of the duct (18).

9. Motor vehicle (10) comprising a rear portion (12) according to any one of claims 1 to 8.
